(19) Europäisches Patentamt
European Patent Office
Office européen des brevets

(11) **EP 4 700 145 A1**

(12) **EUROPEAN PATENT APPLICATION**
published in accordance with Art. 153(4) EPC

(43) Date of publication:
**25.02.2026 Bulletin 2026/09**

(21) Application number: **24814251.5**

(22) Date of filing: **21.05.2024**

(51) International Patent Classification (IPC):
**C22C 38/50** (2006.01)   **B32B 15/18** (2006.01)
**B21B 1/22** (2006.01)

(52) Cooperative Patent Classification (CPC):
**B21B 1/22; B21B 1/38; B21B 37/58; B21B 37/74;
B21B 47/00; B32B 15/01; B32B 15/18;
B32B 37/06; B32B 37/10; B32B 38/00; C21D 8/02;
C22C 38/02; C22C 38/04; C22C 38/06;
C22C 38/42;**                    (Cont.)

(86) International application number:
**PCT/CN2024/094456**

(87) International publication number:
**WO 2024/245052 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.05.2023 CN 202310604753**

(71) Applicant: **BAOSHAN IRON & STEEL CO., LTD.**
**Shanghai 201900 (CN)**

(72) Inventors:
• **YAN, Bo**
**Shanghai 201900 (CN)**

• **JIAO, Sihai**
**Shanghai 201900 (CN)**
• **XING, Zhao**
**Shanghai 201900 (CN)**
• **HAO, Yingmin**
**Shanghai 201900 (CN)**
• **KONG, Wei**
**Shanghai 201900 (CN)**
• **LIANG, Xiaojun**
**Shanghai 201900 (CN)**

(74) Representative: **FARAGO Patentanwälte GmbH**
**Schloß-Rahe-Straße 15**
**52072 Aachen (DE)**

(54) **390MPA-GRADE HOT-ROLLED STRIP STEEL USED FOR BUILDING STRUCTURES AND RESISTANT TO SEA WAVE SPLASH ZONE CORROSION, AND MANUFACTURING METHOD THEREFOR**

(57)     The present invention provides a hot-rolled strip steel for building structure, including a base layer, a corrosion-resistant layer, and an interfacial transition layer between the base layer and the corrosion-resistant layer. The hot-rolled strip steel for building structure of the present invention has a yield strength of $\geq$ 390 MPa, a tensile strength of $\geq$ 515 MPa, a yield-to-tensile ratio of $\leq$ 0.75, an impact energy at -40 °C of $\geq$ 190 J, a corrosion rate resistant to sea wave splash of $\leq$ 0.006 mm/year, an interfacial transition layer thickness of $\leq$ 8 $\mu$m, and an interfacial shear strength of $\geq$ 260 MPa, which exhibits an excellent overall performance. The present invention also provides a method for manufacturing the above hot-rolled strip steel.

FIG. 1

EP 4 700 145 A1

(52) Cooperative Patent Classification (CPC): (Cont.)
  **C22C 38/46; C22C 38/48; C22C 38/50; C22F 1/18**

**Description**

## TECHNICAL FIELD

The present invention relates to the technical field of steel for building structure, and in particular to a hot-rolled strip steel for building structure that is resistant to corrosion in sea wave splash zone and manufacturing method therefor.

## BACKGROUND

The marine environment is an extremely harsh and complex corrosive environment. Seawater, being a strong electrolyte solution, contains a high concentration of chloride ions. As the main structure of marine engineering facilities, steel facilities are prone to electrochemical reactions with surrounding media and are severely corroded, greatly reducing the service life of these facilities. Especially in the sea wave splash zone, which represents the most severe corrosive area of the marine environment, various facilities are subjected to a series of external factors such as alternating wet-dry conditions, sea spray, sunlight, corrosive atmospheric constituents and oxygen, resulting in particularly severe corrosion of materials.

Surveys indicate that steel piles in facilities such as harbor docks and offshore oil platforms undergo severe corrosion in sea wave splash zones, usually 3-10 times of that in fully immersed seawater zones. Once severe localized corrosion damage occurs in such zones, it will greatly reduce the load-bearing capacity of the entire facility, shorten its service life, compromise operational safety, and even lead to premature decommissioning of the facility.

Due to the fact that the sea wave splash zone is located in an alternating dry-wet zone with ample oxygen supply, the resulting corrosion products offer no protective effect on the steel substrate. Moreover, Due to the splashing of seawater, seawater spray directly impinges on the metal surface, causing severe corrosion. Corrosion tests and survey results indicate that, under normal conditions, the average corrosion rate of ordinary carbon steel, low-alloy steel, etc. in marine atmosphere is about 0.03 to 0.08 mm/year, whereas in the sea wave splash zone, it reaches 0.3 to 0.5 mm/year. In the sea wave splash zone, steel piles are prone to severe corrosion damage, greatly reducing the load-bearing capacity of the entire steel structure and compromising operational safety, shortening service life, and leading to premature decommissioning.

Based on the aforementioned service conditions, commercially pure titanium is selected as the corrosion-resistant layer. Titanium exhibits high chemical reactivity and readily reacts with oxygen in air to form oxides. The oxide on the surface of titanium metal is dense, stable, and possesses a strong "self-healing" ability. The "self-healing" ability of titanium oxide primarily refers to the rapid formation of a new layer of titanium oxide film on a damaged surface of titanium material, which prevents corrosive media from further contact with titanium.

For steel used in marine building structure, in addition to meeting the requirements of corrosion resistance, it is also necessary to exhibit good mechanical properties, among which the yield-to-tensile ratio and low-temperature impact toughness are increasingly becoming key indicators of concern for building steel. The yield-to-tensile ratio is the ratio of the yield strength to the tensile strength of steel, which reflects the ability of steel to undergo plastic deformation without strain concentration. The lower the yield-to-tensile ratio, the more evenly the plastic deformation of the steel can be distributed over a wider range. The plastic deformation of a steel structure system made of steel with low yield-to-tensile ratio can be uniformly distributed over a wide range under seismic force; while materials with high yield-to-tensile ratio may experience strain concentration, reducing the overall plastic deformation ability of the steel, leading to brittle failure of the structure, thereby resulting in structural instability and sudden collapse. Steel undergoes brittle transformation at low temperatures, and its fracture mode changes from ductile fracture to brittle fracture. Its engineering significance lies in the fact that when steel is used at temperatures higher than this, components will not undergo brittle fracture. Therefore, structural steel usually needs to have corresponding requirements for its low-temperature impact performance based on the material's service environment. The ocean temperature varies greatly at different latitudes. Taking the vicinity of Bohai Bay in China as an example, the winter coastal temperature can be -20 °C or less. This requires building materials to have good impact performance at -40 °C to ensure that brittle fracture does not occur. However, when improving the ductility and toughness of steel, if the increase in tensile strength is small, the yield-to-tensile ratio will increase significantly, making it challenging to maintain a low yield-to-tensile ratio.

Chinese Patent Application CN201210260231.7 discloses a method for manufacturing a titanium-steel-titanium double-sided clad plate. The method comprises: stacking four titanium plates and three steel plates in a specific sequence within a sealed frame formed by welding the two outermost steel plates, applying a separating agent - prepared by mixing 1 part by weight of active $\alpha$-$Al_2O_3$ and 1.5 parts by weight of 4% aqueous polyvinyl alcohol solution - between the titanium plates, and using a nickel-based alloy as a transition layer between the titanium and steel plates. The assembly is heated to 500-630 °C and vacuumed for 1-2 hours, with a vacuum degree of 20-200 Pa. It is characterized in that after assembling the slabs, welding is performed before vacuum pumping, and conventional arc welding and submerged arc welding suffice for the welding process. Compared to welding under vacuum conditions, the welding requirements are lower, the cost is lower, and there is no need to separately build a vacuum chamber. Subsequently, the clad slab is subjected to conventional heating furnace and rolled at a rolling temperature of 700-900 °C to achieve cladding. By seal welding the outermost steel plates and vacuuming, the carbon in the gas can be separated, while a nickel-based alloy isolation layer is applied to prevent the formation of TiC at the interface, resulting in a titanium-steel clad plate with a shear strength of 230-260 MPa and an interfacial bonding rate of 99.6-100%.

Chinese Patent Application CN201710769999.X discloses a method for manufacturing titanium-steel clad plate. The method comprises: selecting surfaces to be in contact with one another for a titanium-steel clad slab, applying a high-temperature-resistant, anti-carburization and anti-nitridation isolation coating onto the surfaces of titanium to be in contact, and drying at room temperature. After drying is completed, the titanium slabs are aligned and stacked in pairs with the steel slab placed therebetween to complete the assembly and obtain a clad slab. The thickness of single titanium plate used is greater than 2 mm, and the thickness of the steel plate is greater than 5 mm. The periphery of the clad slab is then seal-welded while leaving an unwelded portion of a specific size. The slab is vacuumed to $10^{-2}$-$10^{-3}$ Pa before welding. The slab is heated to 500-700 °C and rolled, wherein a first pass reduction rate is more than 25%, a last pass reduction rate is not more than 15%, a total reduction rate is 60-70%, and a rolling speed is 0.1-1.0 mm/s. The patent application achieves protection against diffusion of impurity elements and oxidation at high temperatures by employing a coating with high-temperature anti-permeation properties, which blocks the diffusion of elements such as carbon and nitrogen. In the Examples, Q235 steel and TA1 titanium were bonded, and the resulting clad plates exhibited shear strengths of 176 MPa, 181 MPa and 182 MPa.

The above two patent applications primarily avoid the formation of brittle Ti compounds by applying an additional nickel-based alloy isolation layer between titanium and carbon steel.

Chinese Patent Application CN201811327623.4 discloses a titanium-steel-titanium clad plate and manufacturing method therefor. The method comprises sandwiching a carbon steel plate between two titanium plates of the same size, followed by warm clad rolling using an irreversible high-rolling-force warm rolling mill to integrally bond the three layers. After rolling, the rolled clad plate is subjected to heat treatment, including primary annealing at 500-600 °C for 20-60 minutes and recrystallization annealing at 680-700 °C for 30-120 minutes. Finally, the product is obtained by straightening, leveling, shearing and shaping. The patent application primarily describes a method for manufacturing a clad titanium steel plate without using hot-rolling cladding. Due to the use of irreversible rolling mills, only single pass rolling production can be carried out, and heat treatment is also required. The Examples mainly involve the production method of steel strip, and is silent about the performance of the product after cladding.

Chinese Patent Application CN201510543767.3 discloses a method for manufacturing titanium-steel clad plate. The bonding strength of the titanium-steel clad plate obtained by this method is high. The patent application involves: fixing a titanium plate between two ordinary carbon steel plates or slabs, welding the periphery of the slab in a vacuum environment, heating the clad slab to 850-900 °C for 120-360 minutes, controlling the rolling process with a starting rolling temperature of 800 °C or more and a finishing rolling temperature of 700 °C or less, and controlling the deformation of each pass to 20-30% and a total deformation during rolling to ≥ 90%. This high-reduction rolling process serves to fracture brittle intermetallic compounds formed at the interface, thereby mitigating their adverse effects on the bonding interface. After rolling, the resulting titanium-steel clad plate achieves a bonding strength greater than 240 MPa. However, the patent application requires a high pass reduction rate and total deformation, which can easily lead to edge weld cracking and damage the vacuum degree during the rolling process, making it unsuitable for interfacial bonding.

Chinese Patent Application CN201610994234.1 discloses a method for manufacturing titanium-steel clad plate, involving an annealing technique for the method for manufacturing titanium steel plate. Firstly, the titanium plates and steel plates are assembled to form a symmetrical multi-layer clad slab with a structure of steel plate-titanium plate-separating agent-titanium plate-steel plate. The cladding is carried out by roll cladding or explosive cladding. The slab after cladding is annealed and pickled. It is first heated to 500-750 °C to recrystallize the core titanium plate, and then heated to 950-1050 °C to recrystallize the base steel plate. The purpose of the patent application is to simultaneously achieve the properties of cladding materials and substrate through two-stage heat treatment. However, two-stage heat treatment can lead to excessive diffusion of elements titanium, iron and carbon, resulting in intermetallic compounds of iron and titanium and brittle materials such as titanium carbide, which degrade the interfacial shear strength.

Chinese Patent Application CN201710996925.X discloses a thin-clad double-sided titanium-steel clad plate and manufacturing method therefor. The method achieves good cladding between the titanium and steel by using thick slab assembly and high-reduction rolling technology. The patent application is directed to a double-sided titanium clad plate composed of a titanium cladding layer, a base layer and a titanium cladding layer. The titanium cladding layer is made of TA2, wherein the titanium cladding layer has a thickness of 0.2-1 mm. The slab assembly is stacked centrally in the following top-to-bottom sequence: cover plate, titanium cladding material, carbon steel substrate, titanium cladding material, and cover plate. After extracting vacuum in a vacuum chamber, the peripheral seams of the assembly are seal-welded by vacuum electron beam, with a vacuum degree of $1.0 \times 10^{-2}$-$4.5 \times 10^{-2}$ Pa. The seal-welded clad slab is heated to 900-920 °C and held for a time period, which is calculated as 1 min/mm × total thickness of clad slab. The starting rolling temperature is 880-900 °C, and the finishing rolling temperature is ≥ 800 °C, followed by air cooling to room temperature.

The single pass reduction rate is $\geq$ 15%, the reduction rate for the first three passes is $\geq$ 20%, and the total reduction rate is $\geq$ 80%. The clad plate obtained after rolling is subjected to trimming, plate splitting, and surface grinding to obtain a double-sided titanium-steel clad plate. In the patent application, through surface cleaning treatment of the clad slab, the covering and air-isolating effect of the cover plates, controlled rolling temperature and high reduction rates, the iron-titanium and titanium-carbon compounds formed at the clad interface are fractured, refined, and dispersed within the clad interface. This improves the distribution state of the compounds, further ensuring the bonding quality and performance stability, resulting in a shear strength of 241 MPa.

Chinese Patent Application CN201710983322.6 discloses a thin-clad titanium-steel clad plate and manufacturing method therefor, which adopts a double-layer structure of cladding titanium and carbon steel. The slab assembly approach and heating process are similar to those in Chinese Patent Application CN201710996925.X, with a starting rolling temperature of 880-900 °C, a single pass reduction rate of 25-30%, and a total reduction rate of $\geq$ 85%. While controlling the single pass reduction rate and total reduction rate, the thickness of the titanium-steel clad plate is limited to 3 to 16 mm. The finishing rolling temperature is 800 °C or more, followed by air cooling to room temperature. The titanium-steel clad plate is obtained through surface treatment, with the titanium cladding layer having a thickness of $\leq$ 1 mm. The patent application enhances the bonding quality by employing a symmetric slab assembly method and encapsulating the titanium within the carbon steel plates through seal welding. After rolling, the steel plate achieves a shear strength of 238 MPa or more, and the clad interfacial bonding rate is 100%. The carbon steel layer meets the requirements of the Chinese national standard for Q345 grade carbon steel.

However, the aforementioned two patent applications do not specify the detailed design of the cladding and base layers, and only describe the tensile properties and shear strength. The required pass reduction rate and total reduction rate for the cladding layer are high, and no control is exercised over performance indicators such as corrosion resistance of the material, low-temperature impact performance of the base layer material and yield-to-tensile ratio, which do not meet the requirements for steel used in building structures.

In summary, the above patent applications primarily describe methods for manufacturing clad steel plates, and the specific embodiments provide only brief explanations regarding performance aspects such as interfacial shear strength and tensile properties. The steel used in the steel structure of sea wave splash zone should not only be resistant to corrosion in sea wave splash zone, but also ensure that it meets the necessary structural steel performance requirements, such as the low yield-to-tensile ratio and corresponding low-temperature impact performance as mentioned above to ensure structural safety. However, the above patents do not include any relevant composition or process design for the corrosion rate, yield-to-tensile ratio, and low-temperature impact performance of the corrosion-resistant layer, and cannot guarantee that it can meet the use requirements of high corrosion-resistant steel plates for steel structures in the sea wave splashing zone environment.

## SUMMARY

One objective of the present invention is to provide a 390-MPa-grade hot-rolled strip steel for building steel structures that is resistant to corrosion in the sea wave splashing zone and a manufacturing method therefor. Without compromising the corrosion resistance *per se* of the corrosion-resistant layer, the mechanical properties of its base layer (carbon steel) also meet the corresponding strength level requirements, and the base layer has excellent yield-to-tensile ratio and low-temperature impact toughness. The hot-rolled strip steel for building structure has a yield strength of $\geq$ 390 MPa, a tensile strength of $\geq$ 515 MPa, a yield-to-tensile ratio of $\leq$ 0.75, an impact energy at -40 °C of $\geq$ 190J, a corrosion rate resistant to sea wave splash of $\leq$ 0.006 mm/year, an interfacial transition layer thickness of $\leq$ 8 $\mu$m, and an interfacial shear strength of $\geq$ 260 MPa. The strip steel can meet the corrosion resistance requirements in the sea wave splash zone environment, and has both good mechanical properties of corrosion resistance in the sea wave splashing zone and high economy. It can be used for steel structural parts such as steel piles of facilities such as seaport terminals and offshore oil platforms.

In the present invention, a low-carbon microalloying composition design is adopted, and by reducing the C content in the carbon steel in the base layer, the formation of TiC compound in the interfacial transition layer and the formation of carbonitrides in the base layer are reduced, thereby hindering grain growth and improving the low-temperature impact toughness of the base layer. On the other hand, through the addition of microalloying elements to the steel, along with rolling and cooling processes, the problem of low material strength in low-carbon conditions is resolved. Furthermore, without adding a metal isolation layer, excellent bonding of titanium and carbon steel is achieved. Meanwhile, by controlling the thickness of the interfacial transition layer, the mechanical properties of the base layer (carbon steel) can meet the corresponding strength level requirements without compromising the corrosion resistance *per se* of the corrosion-resistant layer. Furthermore, the base layer exhibits excellent yield-to-tensile ratio and low-temperature impact toughness.

Specifically, the hot-rolled strip steel for building structure of the present invention comprises a base layer, a corrosion-resistant layer, and an interfacial transition layer between the base layer and the corrosion-resistant layer;

wherein the base layer comprises, in addition to Fe and other inevitable impurities, the following chemical elements in mass percentage:

C: 0.03-0.10%, Si: 0.10-0.30%, Mn: 1.00-1.50%, P: 0.0005-0.003%, S: 0.0005-0.01%, Cr: 0.02-0.15%, Ni: 0.01-0.10%, Cu: 0.002-0.020%, A1: 0.015-0.03%, Ti: 0.008-0.012%, Nb: 0.02-0.045%, N: 0.0005-0.0050%, and V: 0.05-0.20%; and

wherein the corrosion-resistant layer is commercially pure titanium, and the composition thereof meets the standard GB/T3620.1-2016 *"Designation and composition of titanium and titanium alloys"*.

Preferably, the hot-rolled strip steel for building structure of the present invention has a yield strength of $\geq 390$ MPa, a tensile strength of $\geq 515$ MPa, a yield-to-tensile ratio of $\leq 0.75$, an impact energy at -40 °C of $\geq 190$ J, a corrosion rate resistant to sea wave splash of $\leq 0.006$ mm/year, an interfacial transition layer thickness of $\leq 8$ $\mu$m, and an interfacial shear strength of $\geq 260$ MPa.

During the heating and rolling process, atoms diffuse at the interface between the titanium and carbon steel in the base layer, forming an interfacial transition layer between the two. In the present invention, the position where the Fe content in the carbon steel decreases by 5% compared to the matrix is defined as the first boundary of the interfacial transition layer, and the position where the Ti content in the pure titanium layer decreases by 5% compared to the matrix is defined as the second boundary of the interfacial transition layer. The distance from the first boundary to the second boundary is defined as the thickness of the interfacial transition layer.

Preferably, the chemical composition of the base layer further satisfies the following relationships:

$$0.02\% \leq \mathrm{Cu+Ni} \leq 0.10\%;$$

$$2(\mathrm{C+N}) \leq \mathrm{Ti+Nb+Cr+V} \leq 0.35\%;$$

wherein, in calculating the relationships, the symbol for each element is to be substituted with the mass percentage of corresponding element in the base layer.

Preferably, the base layer comprises the following chemical elements in mass percentage: C: 0.03-0.10%, Si: 0.10-0.30%, Mn: 1.00-1.50%, P: 0.0005-0.003%, S: 0.0005-0.01%, Cr: 0.02-0.15%, Ni: 0.01-0.10%, Cu: 0.002-0.020%, A1: 0.015-0.03%, Ti: 0.008-0.012%, Nb: 0.02-0.045%, N: 0.0005-0.005%, V: 0.05-0.20%, and the balance being Fe and other inevitable impurities.

Preferably, the base layer in the present invention has a microstructure of ferrite + bainite + martensite, a content of bainite + martensite is 5-15%, and the ferrite has an average grain size of $\geq$ grade 8.5. Unless otherwise specified, the content of each microstructure in the steel is expressed as a volume fraction.

Preferably, the base layer in the present invention has a yield strength of $\geq 390$ MPa, a tensile strength of $\geq 515$ MPa, a yield-to-tensile ratio of $\leq 0.75$, and an impact energy at -40 °C of $\geq 190$ J.

Preferably, the corrosion-resistant layer is made of TA1, TA2, TA3 or TA4.

Preferably, the corrosion-resistant layer has a microstructure of single, equiaxed $\alpha$-Ti.

Preferably, the corrosion-resistant layer has a corrosion rate resistant to sea wave splash of $\leq 0.006$ mm/year.

Preferably, the interfacial transition layer achieves a 100% metallurgical bond and exhibits a high degree of atomic coherency; and/or the interfacial transition layer has a thickness of $\leq 8$ $\mu$m, and an interfacial shear strength of $\geq 260$ MPa. Preferably, the interfacial transition layer has fine grains with an average grain size of 15-40 $\mu$m, and contains (Ti,Nb) C precipitated particles with a size of less than 120 nm.

Preferably, the thickness of the hot-rolled strip steel for building structure is 1.0 to 20 mm.

In the base layer of the hot-rolled strip steel for building steel structures of the present invention, the design ideas of each element are as follows:

C: It plays a role of solid solution strengthening in steel and can significantly improve the strength of steel. However, excessively high C content is detrimental to welding performance and toughness. More importantly, when the C content is too high, it will diffuse to the cladding interface, forming a large amount of large granular TiC hard phase in the interfacial transition layer, reducing the cladding interface strength. In order to ensure the shear strength at the interface, the present invention adopts a low C content. The change in C content has less effect on the yield strength of steel than on the tensile strength. Under the premise of ensuring the forming and welding performance of the product, appropriately increasing the C content is beneficial to reducing the yield-to-tensile ratio of steel. Based on this, in the composition of the base layer of the hot-rolled strip steel according to the present invention, the C content is controlled to 0.03-0.10%.

Si: Adding Si in the steel can effectively deoxidize and improve the steel purity. Furthermore, Si has a solid solution strengthening effect in the steel, and can increase the strength and hardness of the steel. However, Si is detrimental to the material's weldability. Therefore, the Si content in the composition of the base layer of the hot-rolled strip steel according to the present invention is controlled to 0.10-0.30%.

Mn: Mn is the most cost-effective matrix-strengthening element. It can lower the austenite transformation temperature, delay the pearlite transformation, refine the ferrite grains, and increase the steel strength. Mn also can counteract the adverse effects of sulfur on steel. However, excessively high Mn content can easily lead to segregation bands and martensitic microstructures, which negatively impact the toughness of the steel. Therefore, the Mn content in the composition of the base layer of the hot-rolled strip steel according to the present invention is controlled to 1.00%-1.50%.

A1: A1 is mainly added to the steel in excess as a deoxidizing element to ensure that the O content in the steel is as low as possible. The excess A1 after deoxidization combines with the N element in the steel to form AlN precipitates. During the heating process, AlN hinders the growth of austenite grains, refines the austenite grains, and improves the strength and toughness of the matrix. Meanwhile, the formation of AlN fixes some of the N in the matrix, and reduces the diffusion of interstitial atomic N in the carbon steel base layer towards the cladding interface to form hard TiN in the interfacial transition layer, which deteriorates the interfacial shear strength of the clad plate. In addition, the addition of Al can appropriately reduce the amount of Ti and Nb added, thereby reducing production costs. Based on this, the Al content in the composition of the base layer of the hot-rolled strip steel according to the present invention is controlled to 0.015-0.030%.

Ti: Ti forms stable TiN or Ti(N,C) at high temperatures, which plays the role of fixing C and N, prevents interstitial C and N atoms in the carbon steel base layer from diffusing to the interface, and forms hard TiN or Ti(N,C) precipitates in the interfacial transition layer, thereby obtaining a clad plate with high interfacial shear strength. Meanwhile, TiN hinders the austenite growth during heating, refines the austenite grains, and improves the matrix strength and toughness. During subsequent welding, it inhibits the austenite grain growth, particularly in the heat-affected zone (HAZ) immediately adjacent to the weld molten boundary, thereby improving the toughness of the weld HAZ and adapting to high heat-input welding processes. Ti helps to enhance the strength of the low-carbon matrix and reduces the diffusion of C and N to the interface, resulting in a clad plate with high interfacial shear strength. For this reason, the Ti content in the composition of the base layer of the hot-rolled strip steel according to the present invention is controlled to 0.008-0.012%.

Nb: Nb exists in the steel as solid solution Nb and Nb(C,N), which plays the role of a solution drag and precipitation pinning during the recrystallization process. A small amount of Nb is added into the base layer carbon steel primarily to increase the recrystallization temperature, such that grains in the base layer carbon steel are refined in the recrystallized and un-recrystallized regions after rolling, which improves the low-temperature impact toughness of the base layer carbon steel. Due to the formation of Nb(C,N) precipitates, the prior austenite grains become finer, promoting the formation of finer recrystallized grains and achieving an ideal combination of high strength and toughness. Furthermore, Nb can immobilize interstitial C and N atoms in the matrix, reducing their diffusion towards the interface and contributing to obtain clad plate with high interfacial shear strength. For this reason, the Nb content in the base layer of the hot-rolled strip steel according to the present invention is controlled to 0.02-0.045%.

Cu: Cu plays the role of solid solution strengthening. Furthermore, with the increase of Cu content, the impact toughness of steel at room temperature is slightly improved. Therefore, the Cu content in the composition of the base layer of the hot-rolled strip steel according to the present invention is controlled to 0.002-0.020%.

N: N element can generate second phase particles with Ti and Al, refine austenite grains, and improve matrix strength and toughness. However, excessively high N content results in excessive TiN and coarse particles, which can affect the plasticity and toughness of the carbon steel in the base layer. Based on this, the N content in the base layer of the hot-rolled strip steel according to the present invention is controlled to 0.0005-0.0050%.

Ni: Ni is an element that stabilizes austenite and has a certain effect on improving toughness and strength. Adding Ni in steel can greatly improve the low-temperature impact toughness of the steel. However, nickel is expensive, and excessive addition can increase the cost of the clad plate. Therefore, an appropriate amount of Ni is added to the composition of the base layer composition of the hot-rolled strip steel according to the present invention, and the Ni content is controlled to 0.01-0.10%.

Cr: Cr is a strong carburizing element, has a low diffusion rate in austenite, and hinders the diffusion of C element. During low-temperature processing, it forms fine carbides, which act as precipitation strengthening. Simultaneously, it can fix interstitial C and N atoms in the matrix, reducing the diffusion of C and N to the interface, resulting in a clad plate with high interfacial shear strength. While Cr improves the matrix strength in the steel, it also reduces toughness. In order to achieve the optimal balance of strength and toughness, the Cr content in the composition of the base layer of the hot-rolled strip steel according to the present invention is controlled to 0.02-0.15%.

V: V is a strong carbonitride-forming element. When V is added in the steel in combination with Ti and Nb, it can form fine, complex carbonitrides. Furthermore, the precipitation temperature range is widened, effectively preventing austenite grain growth, inhibiting the recrystallization process, and improving the strength and toughness of the base layer carbon steel. Furthermore, the precipitation temperature of V carbonitrides is relatively low, effectively preventing ferrite grain growth during the phase transformation process and strengthening the strength of the ferrite matrix. Based on this, an appropriate amount of V is added to the composition of the base layer of the hot-rolled strip steel according to the present invention, and the V content is controlled to 0.05-0.20%.

S and P are both unavoidable impurity elements, and their contents should be as low as possible. Taking into account the actual steelmaking process, in the base layer of the hot-rolled strip steel according to the present invention, the S and P contents are controlled to be: $0.0005\% \leq S \leq 0.010\%$; $0.0005\% \leq P \leq 0.003\%$.

The corrosion-resistant layer of the hot-rolled strip steel according to the present invention is made of commercially pure titanium, preferably TA1, TA2, TA3 and TA4, and its composition meets the standard GB/T3620.1-2016 *"Designation and composition of titanium and titanium alloys"*.

In addition, in the chemical composition design in the base layer of the hot-rolled strip steel for building steel structures according to the present invention:

Both Cu and Ni can improve the toughness of the base layer, and the effect of the composite addition is particularly significant. Furthermore, the addition of Ni can reduce the diffusion rate of C in the steel and reduce the diffusion of C to the interface. Therefore, in preferred embodiments of the present invention, their contents are controlled to $0.02\% \leq Cu+Ni \leq 0.10\%$, and the interfacial transition layer can be controlled to be within 8 $\mu$m.

In addition, Ti, Nb, Cr, and V are all strong carbonitride-forming elements. They will form corresponding carbonitrides in the base layer carbon steel, which can fix the interstitial atoms in the base layer, and hinder the diffusion of C and N interstitial atoms to the interface to form large particles and aggregated carbonitrides in the interfacial transition layer, which helps to control the interfacial transition layer to be within 8 $\mu$m, thereby improving the interfacial shear strength. Meanwhile, Ti, Nb, and Cr can play a role of refining grains in the base layer carbon steel grains and improving toughness at different stages of hot rolling. Therefore, in preferred embodiments of the present invention, their contents are controlled to: $2(C+N) \leq Ti+Nb+Cr+V \leq 0.35\%$.

In calculating the above relationships, the symbol for each chemical element is to be substituted with mass percentage of corresponding element in the base layer.

In another aspect, the present invention provides a method for manufacturing the hot-rolled strip steel for building structure, including the following steps performed in sequence:

1) smelting and casting
smelting and casting into slabs for the base layer and the corrosion-resistant layer, based on compositions of the base layer and the corrosion-resistant layer, respectively;
2) assembling slabs
performing surface grinding and polishing on the slabs for the base layer and the corrosion-resistant layer, bonding the slabs for the base layer and the slabs for the corrosion-resistant layer together, and performing peripheral weld sealing along bonding interfaces of the slabs to form a clad slab comprising the base layer and the corrosion-resistant layer; performing a vacuum treatment to bonding interfaces after weld sealing;
3) heating
heating the clad slab to 900-1000 °C to form an interfacial transition layer between the base layer and the corrosion-resistant layer;
4) rolling
rolling the clad slab to obtain a steel strip, wherein rough rolling is controlled to be performed at a temperature of 860 °C or more; finish rolling is controlled to be performed at a temperature of 780-850 °C; a pass reduction rate is 5-20%, preferably 10-15%; and a cumulative reduction rate is ≥ 85%;
5) cooling
in the first stage, cooling the steel strip to 700-750 °C at a cooling rate of ≤ 10 °C/s after leaving a rolling mill stand; in the second stage, cooling to 400-500 °C at a cooling rate of 30-50 °C/s; and coiling at this temperature to produce the hot-rolled strip steel.

Preferably, in step 2), the thickness of the corrosion-resistant layer is 0.5-20% of the total thickness of the clad slab.

Preferably, in step 3), the thickness of the interfacial transition layer formed between the base layer and the corrosion-resistant layer is $\leq 8 \mu$m. More preferably, the thickness of the interfacial transition layer is 0.5 $\mu$m or more.

Preferably, in step 4), the pass reduction rate used during rolling is 10-15%.

In the manufacturing method of the present invention, the design principles of each process are as follows:

1) Smelting: P and S elements deteriorate the toughness at break of steel, so P and S contents must be kept at low level during the smelting process to improve the steel slab quality. By adopting clean steel production technology, the gas and inclusion content in the steel can be reduced, the overall performance of the steel can be improved, especially its resistance to lamellar tearing can be improved.

2) Assembling slabs: The thickness of the corrosion-resistant layer is set to 0.5-20% of the total thickness of the clad slab. The slabs for corrosion-resistant layer and base layer carbon steel are pre-treated, and peripheral weld sealing is performed along the bonding interfaces of the slabs. The bonded surfaces after weld sealing are then vacuumed. Vacuum treatment can protect the surface of the corrosion-resistant layer from oxidation, and is also an important condition to ensure that the corrosion-resistant layer is resistant to corrosion in the sea wave splash zone. Meanwhile, it can also ensure that the corrosion-resistant layer avoids the phenomena such as edge cracking and corrosion-resistant layer crushing during deformation at a large cumulative reduction rate.

3) Heating: For base layer carbon steel, the slab heating temperature is generally controlled to 1000-1250 °C. This facilitates the dissolution and full diffusion of precipitates in the steel, promotes the homogenization of elements in the slab, and maximizes the strengthening effect of microalloying elements within the steel. For cladding commercially pure titanium plate, the heating temperature is generally controlled to 850-1000 °C. Excessively high heating temperature can cause β-phase transformation, and the β phase will grow rapidly, deteriorating the performance of commercially pure titanium. Furthermore, excessively high heating temperature also promotes full diffusion of elements, facilitating 100% metallurgical bonding at the interface. However, higher heating temperature increase the tendency for austenite grains to coarsen, making subsequent controlled rolling more difficult. Most importantly, it accelerates the diffusion of C, N, Ti, and Fe towards the interface, leading to the formation of thick brittle precipitates and intermetallic compounds at the interface, resulting in a thick interfacial transition layer and degrading interfacial shear strength. Preferably, a lower heating temperature is used compared to conventional carbon steel production, and the heating temperature is set to be 900-1000 °C.

4) Rolling: Rough rolling is controlled to be performed at a temperature of 860 °C or above. Rolling at high reduction rates in the high-temperature rough rolling zone allows for sufficient recrystallization of the microstructure, resulting in refining grain and improving material strength and toughness. Controlled rolling is performed in the un-recrystallized zone, and austenite recrystallization no longer occurs at this stage. A reasonable reduction rate and finishing rolling temperature are used to accumulate deformation energy and deformation dislocations, resulting in the formation of high-density deformation bands within the austenite grains. This increases the number of deformation nuclei in the ferrite phase, further refines the matrix grain size after phase transformation, and improves the material's strength and toughness. Furthermore, deformation induces precipitation of Nb, Ti, Cr and V carbonitrides at this stage, enhancing matrix strength, inhibiting C diffusion to the interface, and preventing the formation of excessively thick TiC at the interface which degrades interfacial shear strength. The reduction rate per pass is maintained at 5-20%, with a cumulative reduction of $\geq 85\%$. The finishing rolling temperature for finish rolling is preferably controlled to 780 - 850 °C, ensuring the corrosion resistance of titanium while avoiding rolling the base layer in the two-phase region. Meanwhile, ferrite with an average grain size of $\geq$ grade 8.5 and bainite + martensite with a content of 5-15% are obtained.

5) Cooling: In the present invention, the starting cooling, finishing cooling, and cooling rate are controlled to achieve control over the type, size and various contents of rolled microstructure. Excessively fast cooling rates will result in the formation of large amounts of bainite and martensite. The cooling rate should be reasonably controlled, due to the facts that: the martensite phase is a microstructure having low toughness and high yield-to-tensile ratio and is not conducive to the performance of the steel plate; excessively slow cooling rate leads to the formation of a large amount of coarse ferrite; and the coarse microstructure is prone to the expansion of cracks, resulting in a decrease in impact performance.

By controlling the finishing rolling temperature for finish rolling, the formation of abnormally coarse microstructures caused by rolling in the two-phase region can be avoided. Meanwhile, after rolling, rapid cooling to the phase transformation temperature can be achieved, and further microstructure growth is inhibited. By refining the grains, material strength and low-temperature impact toughness are improved, and a hard-phase microstructure of 5-15% or more is formed to ensure strength.

Preferably, a two-stage cooling method is employed: After leaving the rolling mill stand, it is first cooled to the ferrite-phase transformation temperature at a cooling rate of $\leq 10$ °C/s, and then rapidly cooled to 400-500 °C at a cooling rate of 30-50 °C/s for coiling, thereby obtaining a small amount of bainite and martensite, achieving microstructure recovery during coiling, promoting the precipitation of V carbonitride, and ensuring that the base layer has a low yield-to-tensile ratio and high low-temperature impact toughness.

Preferably, when the corrosion-resistant layer is too thick, the mechanical properties and production cost of the material will be affected. When the corrosion-resistant layer is too thin, the corrosion resistance and service life of the material will be compromised. Therefore, in the above-mentioned process of assembling slabs, the corrosion-resistant layer preferably accounts for 0.5-20% of the total thickness of the clad slab.

In the present invention, through cladding the corrosion-resistant layer with base layer, along with compositional design and thickness ratio design, a corrosion-resistant layer (that is resistant to the corrosion in the sea water splash zone) is formed on the surface of the base layer (i.e. the carbon strip steel) by rolling process, ultimately obtaining the strip steel exhibiting resistance to corrosion in sea water splash zone, good mechanical properties and high economic efficiency. The strip steel is further processed into structures, which can be used as steel structures used in sea wave splash zone environments.

Compared with the prior art, the present invention provides the following beneficial effects:
In the present invention, by employing a low-carbon microalloying composition design, an excellent bonding of titanium and carbon steel is achieved without the addition of a metal isolation layer. Simultaneously, by controlling the thickness of the interfacial transition layer, the mechanical properties of the base layer (carbon steel) meet the corresponding strength level requirements without compromising the corrosion resistance *per se* of the corrosion-resistant layer. Furthermore, the base layer exhibits excellent yield-to-tensile ratio and low-temperature impact toughness.

In the present invention, by reducing the C content in the base layer carbon steel, the formation of TiC compounds in the interfacial transition layer and the formation of carbonitrides in the base steel are reduced, grain growth is hindered, and the low-temperature impact toughness of the base layer is improved. On the other hand, the addition of microalloying elements in the steel solves the problem of low material strength in low-carbon conditions. The resulting hot-rolled strip has a yield strength of $\geq 390$ MPa, a tensile strength of $\geq 515$ MPa, a yield-to-tensile ratio of $\leq 0.75$, and an impact energy at -40 °C of $\geq 190$ J. These properties are all higher than the property requirements of the national standard GB/T 19879-2015 *"Steel plates for building structure"*.

Chinese Patent Application CN201210260231.7 does not specify the heating temperature. By adding a nickel plate as an isolation layer between the cladding layer and base layer to prevent the formation of TiC at the interface, the resulting titanium-steel clad plate has an interface bonding rate of 99.6-100%. However, the present invention specifies that the clad slab is heated at a temperature of 900-1000 °C. By means of low-carbon and micro-alloying designs, the addition of Ni is reduced, and the production cost is lowered. Meanwhile, by optimization of the process such as heating and rolling, a transition layer with a certain thickness can be formed, and the formation of the brittle phase TiC in the interfacial transition layer is reduced, and 100% metallurgical bonding at the interface (complete metallurgical bonding) is achieved.

In Chinese Patent Application CN201710769999.X, the slab is heated at a temperature of 500-700 °C, the total reduction ratio is 60-70%, and the resulting strip steel has a maximum interfacial shear strength of 182 MPa. However, in the present invention, the influence of high-temperature phase transformation of commercially pure titanium on the corrosion resistance of the corrosion-resistant layer is fully considered, and the strength and toughness of the base layer carbon steel are controlled. By comprehensive processing technology design in combination with low-carbon micro-alloying design, the heating temperature of the clad slab is set to be 900-1000 °C. At this temperature, the corrosion-resistant layer undergoes no phase transformation, and it ensures that precipitates in the base layer carbon steel are fully dissolved. During the controlled rolling process, the base layer grains are refined to improve the strength and toughness of the base layer. Combined with the cumulative reduction rate of $\geq 85\%$, the brittle phase of the interfacial transition layer is broken, thereby improving the interfacial shear strength.

In the aforementioned two patent applications, the formation of brittle Ti compounds is primarily avoided by adding an additional nickel-based alloy isolation layer between titanium and carbon steel. However, in the present invention, through composition and process designs, no isolation layer is added. In the present invention, the assembling slab method is different from the two aforementioned patent applications, and the material of the base layer carbon steel is also significantly different.

The process conditions of the present invention ensure both the corrosion resistance *per se* of the industrial pure titanium in the corrosion-resistant layer and the mechanical properties of the base layer, solving the problem that the processing windows of traditional titanium and carbon steel are too different to be balanced. Simultaneously, the elements in the base layer and the corrosion-resistant layer are fully diffused to form an interfacial transition layer with a thickness of not more than 10 $\mu$m. The layer has fine grains with an average grain size of 15-40 $\mu$m, and contains (Ti,Nb)C precipitates with a size of less than 120 nm, thereby enhancing interface bonding property and ensuring an interfacial shear strength of ≥ 260 MPa, which exceeds the interfacial shear strength 182 MPa of Chinese patent application CN201710769999.X.

In Chinese Patent Application CN201811327623.4, the cladding process is achieved by warm rolling, followed by a two-stage heat treatment process, including a primary annealing at a temperature of 500-600 °C for 20-60 minutes, and a recrystallization annealing at a temperature of 680-700 °C for 30-120 minutes. This method is a non-hot-rolling cladding method for producing clad titanium-steel strip, and is completely different from the manufacturing method of the present invention.

In Chinese Patent Application CN201510543767.3, the heating temperature is 850-900 °C, the finishing rolling temperature is 700 °C or below, the deformation per pass is controlled to 20-30%, a total rolling deformation is controlled to be ≥ 90%, and the shear strength of the titanium-steel clad plate is greater than 240 MPa. Both the pass reduction rate and total deformation amount required by the application are very high, which can easily cause edge cracking of weld during the rolling process, destroy the vacuum, make bonding difficult, and result in poor rolling stability. However, in the present invention, the reduction rate per pass is controlled to be 5-20%, which can effectively prevent weld cracking during rolling, ensure vacuum within the slab, and significantly improve the stability and success rate of the interfacial shear strength and rolling.

Chinese Patent Application CN201610994234.1 discloses an annealing production method for a titanium steel plate. First, titanium and steel plates are assembled to form a symmetrical multi-layer clad slab consisting of steel plate, titanium plate, separator, titanium plate, and steel plate. The cladding is carried out by roll cladding or explosive cladding. The slab after cladding is annealed and pickled, first heated to 500-750 °C to recrystallize the core titanium plate, and then heated to 950-1050 °C to recrystallize the base steel plate. The rolling process and the corrosion and structural properties of the resulting steel plate are not specified. This method significantly differs from the present invention in its manufacturing process. The present application does not require a two-stage heat treatment. Furthermore, a two-stage heat treatment can lead to excessive diffusion of elements titanium, iron, and carbon, resulting in brittle iron-titanium intermetallic compounds and titanium carbides, which degrade interfacial shear strength.

In Chinese Patent Application CN201710996925.X, the corrosion-resistant layer is made of TA2, wherein the titanium clad layer has a thickness of 0.2-1 mm. The material is heated to 900-920 °C and kept for a time period. The starting rolling temperature is 880-900 °C, and the finishing rolling temperature is 800 °C or more, followed by air cooling to room temperature, achieving a shear strength of 241 MPa. In the present invention, the heating temperature is 900-1000 °C, the finish rolling is performed at a temperature of 750-850 °C, and a two-stage cooling method is employed. Under such processes, it is possible to achieve a hot-rolled plate, wherein TA1, TA2, TA3 or TA4 is used as the corrosion-resistant layer, the corrosion-resistant layer accounts for 0.5%-20% of the total thickness of the clad slab, and the interfacial shear strength is ≥ 260 MPa.

In Chinese Patent Application CN201710983322.6, the assembling slab method and heating process are similar to those in Chinese Patent Application CN201710996925.X. In the application, the single pass reduction rate is 25-30%, and the total reduction rate is ≥ 85%. While controlling the single pass reduction rate and the total reduction rate, the thickness of the titanium-steel clad plate is limited to be 3-16 mm, the finishing rolling temperature is 800 °C or above, and it is air-cooled to room temperature. The titanium-steel clad plate is obtained by surface treatment, wherein the thickness of the titanium clad layer is ≤ 1 mm. In the present invention, a single-pass reduction is 5-20%, rolling stability is controlled, and a two-stage cooling method is employed to ensure the material's microstructure, thereby controlling the yield-to-tensile ratio and toughness. There are also significant differences in the thickness of the corrosion-resistant layer and the total thickness of the composite strip.

The 390 MPa-grade hot-rolled strip steel for building structure that is resistant to corrosion in the sea wave splash zone according to the present invention can solve the essential pain points of stainless steel or carbon steel used in sea wave splash zone environments. This 390-MPa-grade hot-rolled strip steel for building structures that is resistant to corrosion in the sea wave splash zone can be effectively applied to the manufacture of steel structures used in sea water splash zone environments (e.g., harbor terminals, offshore oil platforms, and other facilities). It can meet the requirements for resistance to corrosion in sea wave splash zone and mechanical performance of these components, significantly improving their applicability, safety, and durability, and providing significant economic and social benefits.

**BRIEF DESCRIPTION OF THE DRAWINGS**

FIG. 1 is a schematic diagram of an interlayer structure of the hot-rolled strip steel for building structure of the present invention;

FIG. 2 is a schematic diagram of another interlayer structure of the hot-rolled strip steel for building structure of the present invention;

FIG. 3 is a microstructure photograph of the corrosion-resistant layer of the hot-rolled strip steel for building structure in Example 3 of the present invention;

FIG. 4 is a scanning image of the interfacial transition layer of the hot-rolled strip steel for building structure in Example 3 of the present invention; and

FIG. 5 is a microstructure photograph of the base layer of the hot-rolled strip steel for building structure in Example 3 of the present invention.

Reference numerals:

1: base layer, 2: corrosion-resistant layer, 3: interfacial transition layer.

## DETAILED DESCRIPTION OF THE EMBODIMENTS

The technical solution of the invention will be further described in detail below with reference to the examples and drawings. It should be understood that the following examples are only used to describe the specific embodiments of the invention and do not constitute any limitation on the scope of protection of the invention.

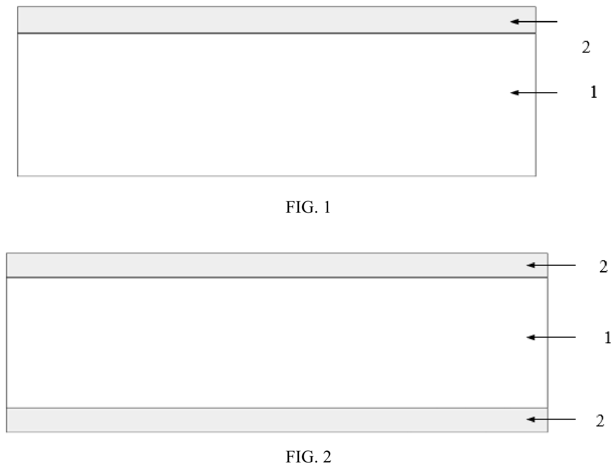

Referring to FIG. 1 and FIG. 2, schematic diagrams of two types of interlayer structures of the hot-rolled strip steel for building structure of the present invention are shown, wherein 1 is a base layer, 2 is a corrosion-resistant layer, and 3 is an interfacial transition layer.

The composition of the base layer of the hot-rolled strip steel (clad steel plate) for building structures according to the present invention is shown in Table 1, wherein the balance of the composition is Fe and inevitable impurities. Table 2 shows the manufacturing process parameters for the clad steel plates in Examples and the Comparative Examples according to the present invention. Table 3 shows the metallographic structure of the base layer (carbon steel) in the hot-rolled strip steels of Examples and Comparative Examples, as well as the mechanical properties, interfacial transition layer thickness, and shear strength of the hot-rolled strip steels. The metallographic structure of carbon steel comprised bainite and martensite, the balance being ferrite. The hot-rolled strip steel of Example 1 was taken as an example, in which the volume fraction of ferrite was 91.9%.

Specifically, the yield strength and tensile strength of the clad steel plate were measured in accordance with GB/T 6396-2008 *"Clad steel plates - Mechanical and technological test"* and GB/T 228-2010 *"Metallic materials - Tensile testing - Method of test at room temperature".* The impact energy $KV_2$/J (longitudinal) at -40 °C of the clad steel plate was measured in accordance with GB/T 6396-2008 *"Clad steel plates - Mechanical and technological test"* and GB/T 229-2020 *"Metallic materials - Charpy pendulum impact test method".* The interfacial shear strength of the clad steel plate was measured in accordance with GB/T 6396-2008 *"Clad steel plates - Mechanical and technological test".*

The yield strength and tensile strength of the base layer carbon steel were measured in accordance with GB/T 6396-2008 *"Clad steel plates - Mechanical and technological test"* and GB/T 228-2010 *"Metallic materials - Tensile testing - Method of test at room temperature".* The impact energy $KV_2$/J (longitudinal) at -40 °C of the base layer carbon steel was measured in accordance with GB/T 6396-2008 *"Clad steel plates - Mechanical and technological test"* and GB/T 229-2020 *" Metallic materials - Charpy pendulum impact test method".*

The grain size grading of ferrite in the base layer carbon steel was carried out as follows: the grain size of ferrite in carbon steel was graded using the intercept method according to GB/T 6394-2017 *"Determination of estimating the average grain size of metal".*

The Comparative Examples were prepared by the above steps which were basically the same as Examples of the present invention, except that the composition of the base layer carbon steel and certain process parameters used in the rolling or cooling step did not conform to the requirements of the present invention.

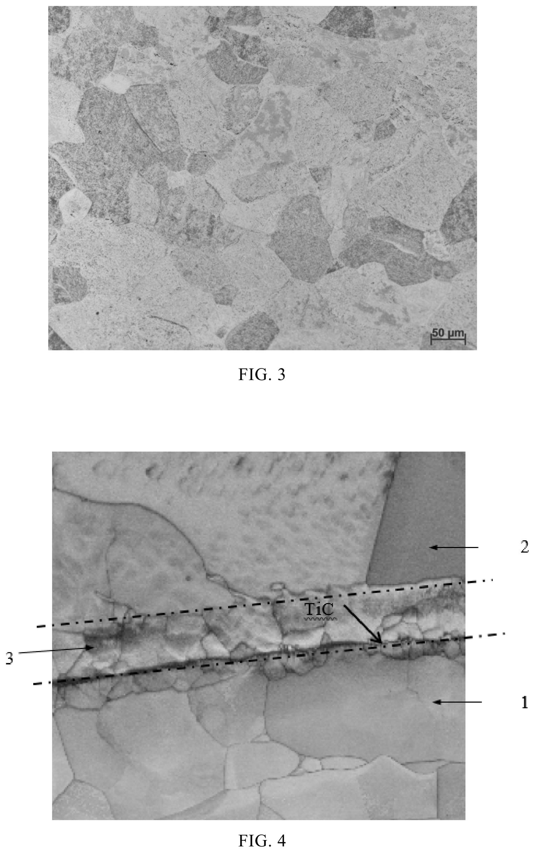

FIG. 3 shows the metallographic structure of the corrosion-resistant layer in Example 3, which shows a single, equiaxed $\alpha$-Ti with an average grain size of 103.4 $\mu$m.

FIG. 4 shows the microstructure of the interfacial transition layer in Example 3, wherein the thickness of the interfacial transition layer is 7.4 $\mu$m, and wherein the discontinuous fine particles are TiC with a size of less than 120 nm.

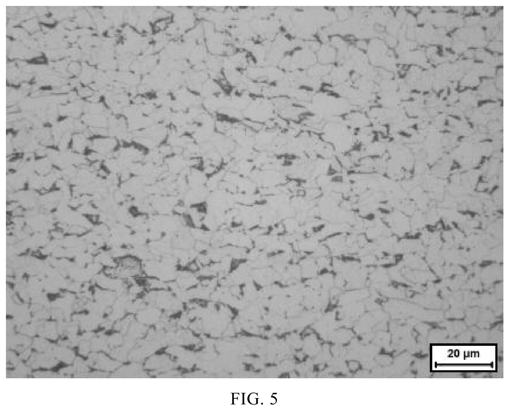

FIG. 5 shows the metallographic structure of the base layer in Example 3, showing that the metallographic structure of the base layer carbon steel was ferrite + bainite + martensite, wherein the volume fraction of bainite + martensite was 7.8%, and the grain size grade of the ferrite was $\geq$ grade 8.5.

Table 4 shows the corrosion performance of coupon specimens of the clad steel plates in Examples 1-8 and Comparative Examples 1-4 after six months in the South China Sea wave splashing zone. The corrosion test was conducted in accordance with GB/T *5776-2005 "Corrosion of metals and alloys - Guidelines for exposing and evaluating metals and alloys in surface sea water".* The chloride ion concentration (%) represents the proportion of chloride ion mass in total mass of the solution. For example, a chloride ion concentration of 5% means that 5 grams of chloride ions are present in 100 grams of the solution.

The observation results show that, except for Comparative Example 4, the corrosion rates of the other Examples and Comparative Examples were all ≤ 0.006 mm/year.

In Comparative Examples 1-4, some properties of the clad steel plates failed to meet the use requirements (the performance parameters were not within the range limited by the present invention) due to the use of composition design requirements or hot working process conditions that do not meet the requirements. Specifically:

In Comparative Example 1, the chemical composition without Ti, Nb and Cr addition was used, and the rolling reduction rate used was not within the range limited by the present invention, and therefore, the yield strength, yield-to-tensile ratio, impact performance and interfacial shear strength failed to meet the requirements.

In Comparative Example 2, the chemical composition without Ni addition was used, and the finish rolling temperature and the cooling temperature at second stage were not within ranges limited by the present invention, and therefore, the yield-to-tensile ratio and impact performance thereof failed to meet the requirements.

In Comparative Example 3, the addition amount of the chemical composition Cu+Ni was less than 0.02%, and the cooling temperatures at the first and second stages were not within the ranges limited by the present invention, so that the metallographic structure comprised a large amount of bainite + martensite, and the mechanical properties, yield-to-tensile ratio, and impact performance failed to meet the requirements.

In Comparative Example 4, the heating temperature, the finish rolling temperature, and the cooling temperature at the first stage were not within the ranges limited by the present invention, so the thickness of the interfacial transition layer was too thick, resulting in that the shear strength did not meet the performance requirements, and because the heating temperature was too high, the β-Ti failed to be completely eliminated in the subsequent processing and cooling process, resulting in a high corrosion rate.

According to the technical solution of the present invention, the base layer in the strip steel exhibited low yield-to-tensile ratio and good low-temperature impact toughness, and meanwhile, the cladding layer exhibited excellent corrosion resistance and high bonding strength. The hot-rolled strip steel exhibited a yield strength of 391-481 MPa, a tensile strength of 551-668 MPa, a yield-to-tensile ratio of ≤ 0.75, an impact energy at -40 °C of 190 J or above, and an interfacial shear strength of greater than 260 MPa. According to the preparation methods of the present invention, in particular the control of the heating, rolling and cooling processes also contributed to the achievement of the corresponding steel properties.

It should be noted that all technical features recorded in this application can be combined freely or associated in any way unless a contradiction occurs. It will be apparent to those skilled in the art that various modifications and changes can be made to the present invention without departing from the scope of the present invention. For instance, features illustrated or described as part of one embodiment can be used with another embodiment to yield a further embodiment. Thus, it is intended that the present invention covers such modifications and changes falling in the scope of the appended claims and their equivalents.

Table 1 (Unit: weight percentage)

| | C | Si | Mn | Al | Ti | Nb | Cu | N | Ni | Cr | V | Corrosion-resis tant layer material |
|---|---|---|---|---|---|---|---|---|---|---|---|---|
| Example 1 | 0.046 | 0.21 | 1.26 | 0.016 | 0.0091 | 0.024 | 0.003 | 0.0027 | 0.041 | 0.052 | 0.078 | TA4 |
| Example 2 | 0.056 | 0.12 | 1.35 | 0.015 | 0.0082 | 0.037 | 0.009 | 0.0031 | 0.072 | 0.127 | 0.176 | TA2 |
| Example 3 | 0.032 | 0.14 | 1.14 | 0.029 | 0.0118 | 0.022 | 0.018 | 0.0042 | 0.049 | 0.048 | 0.098 | TA2 |
| Example 4 | 0.064 | 0.29 | 1.32 | 0.017 | 0.0101 | 0.034 | 0.013 | 0.0038 | 0.087 | 0.107 | 0.184 | TA3 |
| Example 5 | 0.096 | 0.20 | 1.13 | 0.025 | 0.0082 | 0.039 | 0.005 | 0.0016 | 0.065 | 0.136 | 0.165 | TA4 |
| Example 6 | 0.073 | 0.19 | 1.48 | 0.021 | 0.0108 | 0.042 | 0.019 | 0.0006 | 0.039 | 0.115 | 0.127 | TA1 |
| Example 7 | 0.085 | 0.28 | 1.16 | 0.027 | 0.0097 | 0.031 | 0.002 | 0.0008 | 0.098 | 0.099 | 0.196 | TA1 |
| Example 8 | 0.039 | 0.23 | 1.08 | 0.030 | 0.0104 | 0.021 | 0.011 | 0.0005 | 0.012 | 0.025 | 0.054 | TA2 |
| Comparative Example 1 | 0.062 | 0.18 | 1.27 | 0.018 | - | - | 0.012 | 0.0003 | 0.054 | - | 0.194 | TA2 |
| Comparative Example 2 | 0.049 | 0.13 | 1.16 | 0.24 | 0.009 | 0.024 | 0.002 | 0.0004 | - | 0.096 | 0.098 | TA1 |
| Comparative Example 3 | 0.092 | 0.25 | 1.45 | 0.017 | 0.010 | 0.026 | - | 0.068 | 0.073 | 0.121 | 0.127 | TA3 |
| Comparative Example 4 | 0.054 | 0.17 | 1.15 | 0.02 | 0.012 | 0.039 | 0.014 | 0.0031 | 0.042 | 0.148 | 0.149 | TA4 |

Table 2

| | Thickness of clad slab/mm | Thickness of corrosion-resistant layer/mm | Heating temperature/°C | Rough rolling Temperature/°C | Finish rolling temperature/°C | Pass reduction rate/% | Cooling rate in first stage °C/s | Cooling end temperature in first stage/°C | Cooling rate in second stage °C/s | Cooling end temperature in second stage/°C | Thickness of finished product/mm | Cumulative reduction rate/% |
|---|---|---|---|---|---|---|---|---|---|---|---|---|
| Example 1 | 190 | 20 | 938 | 869 | 817 | 13 | 6 | 742 | 45 | 488 | 20 | 89 |
| Example 2 | 300 | 58 | 915 | 872 | 829 | 20 | 8 | 728 | 49 | 412 | 18 | 94 |
| Example 3 | 245 | 36 | 935 | 863 | 836 | 15 | 10 | 715 | 46 | 429 | 8 | 97 |
| Example 4 | 120 | 12 | 953 | 907 | 801 | 8 | 7 | 702 | 31 | 494 | 16 | 87 |
| Example 5 | 295 | 10 | 989 | 921 | 843 | 10 | 9 | 724 | 37 | 432 | 12 | 96 |
| Example 6 | 150 | 1.2 | 911 | 878 | 782 | 5 | 7.2 | 734 | 42 | 479 | 1 | 99 |
| Example 7 | 182 | 15 | 942 | 882 | 796 | 7 | 5 | 739 | 35 | 448 | 10 | 95 |
| Example 8 | 200 | 2.4 | 968 | 897 | 821 | 8 | 8.3 | 748 | 33 | 456 | 5 | 98 |
| Comparative Example 1 | 205 | 15 | 956 | 878 | 807 | 3 | 15 | 741 | 18 | 605 | 3 | 99 |
| Comparative Example 2 | 285 | 34 | 946 | 867 | 734 | 9 | 3 | 724 | 36 | 312 | 5 | 98 |
| Comparative Example 3 | 190 | 15 | 981 | 895 | 849 | 11 | 7 | 778 | 42 | 356 | 15 | 92 |
| Comparative Example 4 | 225 | 22 | 1102 | 1015 | 872 | 16 | 8 | 835 | 45 | 417 | 8 | 96 |

Table 3

| | Base layer | | | Hot-rolled strip steel | | | | | | | Interfacial transition layer | |
|---|---|---|---|---|---|---|---|---|---|---|---|---|
| | Metallographic structure | Ferrite grain size grade | Bainite + martensite content /% | Yield strength/MPa | | Tensile strength/MPa | | Yield-to-tensile ratio | | Impact energy at -40 °C K$V_2$/J (Longitudinal) | Interfacial transition layer thickness / μm | Shear strength / MPa |
| | | | | Transverse | Longitudinal | Transverse | Longitudinal | Transverse | Longitudinal | | | |
| Example 1 | Ferrite + bainite + martensite | 9 | 8.1 | 428 | 416 | 586 | 578 | 0.73 | 0.72 | 201 | 7.8 | 282 |
| Example 2 | Ferrite + bainite + martensite | 8.5 | 9.9 | 479 | 462 | 665 | 651 | 0.72 | 0.71 | 232 | 7.4 | 265 |
| Example 3 | Ferrite + bainite + martensite | 8.5 | 9.1 | 474 | 461 | 668 | 659 | 0.71 | 0.70 | 215 | 7.5 | 272 |
| Example 4 | Ferrite + bainite + martensite | 10 | 14.8 | 481 | 473 | 641 | 648 | 0.75 | 0.73 | 192 | 8 | 266 |
| Example 5 | Ferrite + bainite + martensite | 9 | 8.5 | 462 | 448 | 624 | 614 | 0.74 | 0.73 | 208 | 7.3 | 270 |
| Example 6 | Ferrite + bainite + martensite | 9 | 5.2 | 415 | 391 | 568 | 551 | 0.73 | 0.71 | 202 | 7.4 | 269 |
| Example 7 | Ferrite + bainite + martensite | 10 | 6.4 | 424 | 406 | 589 | 580 | 0.72 | 0.70 | 197 | 7.8 | 263 |
| Example 8 | Ferrite + bainite + martensite | 8.5 | 7.2 | 432 | 418 | 592 | 581 | 0.73 | 0.72 | 206 | 7.5 | 271 |
| Comparative Example 1 | Ferrite + Bainite | 7 | 4.8 | 381 | 372 | 501 | 503 | 0.76 | 0.74 | 127 | 10 | 102 |
| Comparative Example 2 | Ferrite + bainite + martensite | 9 | 10.4 | 426 | 406 | 520 | 501 | 0.82 | 0.81 | 85 | 8.5 | 201 |
| Comparative Example 3 | Ferrite + bainite + martensite | 9 | 22.4 | 498 | 466 | 600 | 568 | 0.83 | 0.82 | 95 | 7.6 | 269 |
| Comparative Example 4 | Ferrite + bainite + martensite | 8 | 17.8 | 491 | 483 | 664 | 653 | 0.74 | 0.74 | 196 | 12.3 | 65 |

Table 4

|  | Scene 1 | Scene 2 | Scene 3 | Scene 4 | Scene 5 | Scene 6 | Scene 7 | Scene 8 |
|---|---|---|---|---|---|---|---|---|
| Chloride ion concentration (%) | 2.2 | 39.8 | 29.7 | 30.4 | 1.6 | 33.6 | 13.3 | 19.1 |
| Temperature (°C) | 38 | 23 | 41 | 45 | 24 | 42 | 33 | 26 |
| | Corrosion rate (mm/year) | | | | | | | |
| Example 1 | 0.002 | 0.003 | 0.005 | 0.006 | 0.002 | 0.005 | 0.003 | 0.001 |
| Example 2 | 0.001 | 0.003 | 0.006 | 0.005 | 0.002 | 0.006 | 0.003 | 0.002 |
| Example 3 | 0.002 | 0.004 | 0.004 | 0.006 | 0.002 | 0.005 | 0.002 | 0.002 |
| Example 4 | 0.001 | 0.002 | 0.004 | 0.005 | 0.001 | 0.006 | 0.002 | 0.002 |
| Example 5 | 0.002 | 0.003 | 0.004 | 0.006 | 0.001 | 0.006 | 0.002 | 0.003 |
| Example 6 | 0.001 | 0.002 | 0.003 | 0.005 | 0.001 | 0.005 | 0.002 | 0.002 |
| Example 7 | 0.002 | 0.003 | 0.004 | 0.006 | 0.001 | 0.005 | 0.003 | 0.002 |
| Example 8 | 0.002 | 0.003 | 0.005 | 0.005 | 0.002 | 0.006 | 0.002 | 0.003 |
| Comparative Example 1 | 0.002 | 0.004 | 0.004 | 0.006 | 0.002 | 0.007 | 0.002 | 0.003 |
| Comparative Example 2 | 0.002 | 0.004 | 0.005 | 0.006 | 0.002 | 0.007 | 0.004 | 0.003 |
| Comparative Example 3 | 0.002 | 0.004 | 0.005 | 0.007 | 0.002 | 0.007 | 0.003 | 0.003 |
| Comparative Example 4 | 0.005 | 0.010 | 0.007 | 0.009 | 0.011 | 0.008 | 0.004 | 0.006 |

**Claims**

1. A hot-rolled strip steel for building structure, wherein the hot-rolled strip steel comprises a base layer, a corrosion-resistant layer, and an interfacial transition layer between the base layer and the corrosion-resistant layer;
   the base layer contains, in addition to Fe and other inevitable impurities, the following chemical elements in mass percentage:

   C: 0.03-0.10%, Si: 0.10-0.30%, Mn: 1.00-1.50%, P: 0.0005-0.003%, S: 0.0005-0.01%, Cr: 0.02-0.15%, Ni: 0.01-0.10%, Cu: 0.002-0.020%, A1: 0.015-0.03%, Ti: 0.008-0.012%, Nb: 0.02-0.045%, N: 0.0005-0.005%, and V: 0.05-0.20%; and
   the corrosion-resistant layer is commercially pure titanium, preferably TA1, TA2, TA3 or TA4.

2. The hot-rolled strip steel for building structure according to claim 1, wherein the chemical composition of the base layer further satisfies the following relationships:

$$0.02\% \leq Cu{+}Ni \leq 0.10\%;$$

$$2(C{+}N) \leq Ti{+}Nb{+}Cr{+}V \leq 0.35\%;$$

   wherein, in calculating the relationships, the symbol for each element is to be substituted with mass percentage of corresponding element in the base layer.

3. The hot-rolled strip steel for building structure according to claim 1 or 2, wherein the base layer comprises the following chemical elements in mass percentage:
   C: 0.03-0.10%, Si: 0.10-0.30%, Mn: 1.00-1.50%, P: 0.0005-0.003%, S: 0.0005-0.01%, Cr: 0.02-0.15%, Ni: 0.01-0.10%, Cu: 0.002-0.020%, A1: 0.015-0.03%, Ti: 0.008-0.012%, Nb: 0.02-0.045%, N: 0.0005-0.005%, V: 0.05-0.20%, and the balance being Fe and other inevitable impurities.

4. The hot-rolled strip steel for building structure according to any one of claims 1 to 3, wherein the base layer has a microstructure of ferrite + bainite + martensite, a content of bainite + martensite is 5% to 15%, and the ferrite has an average grain size of ≥ grade 8.5.

5. The hot-rolled strip steel for building structure according to any one of claims 1 to 4, wherein the base layer has a yield strength of ≥ 390 MPa, a tensile strength of ≥ 515 MPa, a yield-to-tensile ratio of ≤ 0.75, and an impact energy at -40 °C of ≥ 190 J.

6. The hot-rolled strip steel for building structure according to claim 1, wherein the corrosion-resistant layer has a microstructure of single, equiaxed $\alpha$-Ti.

7. The hot-rolled strip steel for building structure according to claim 1 or 6, wherein the corrosion-resistant layer has a corrosion rate resistant to sea wave splash of ≤ 0.006 mm/year.

8. The hot-rolled strip steel for building structure according to claim 1, wherein the interfacial transition layer has a thickness of ≤ 8 $\mu$m and an average grain size of 15 to 40 $\mu$m, contains precipitated particles of (Ti,Nb)C with a size of less than 120 nm, and has an interfacial shear strength of ≥ 260 MPa.

9. The hot-rolled strip steel for building structure according to claim 1, wherein the hot-rolled strip steel has a thickness of 1.0 to 20 mm.

10. The hot-rolled strip steel for building structure according to any one of claims 1 to 9, wherein the hot-rolled strip steel has a yield strength of ≥ 390 MPa, a tensile strength of ≥ 515 MPa, a yield-to-tensile ratio of ≤ 0.75, an impact energy at -40 °C of ≥ 190 J, a corrosion rate resistant to sea wave splash of ≤ 0.006 mm/year, an interfacial transition layer thickness of ≤ 8 $\mu$m, and an interfacial shear strength of ≥ 260 MPa.

11. A method for manufacturing the hot-rolled strip steel for building structure according to any one of claims 1 to 10, wherein the method comprises the following steps performed in sequence:

    1) smelting and casting
    smelting and casting into slabs for the base layer and the corrosion-resistant layer, based on compositions of the base layer and the corrosion-resistant layer according to claim 1, 2 or 3, respectively;
    2) assembling slabs
    performing surface grinding and polishing on the slabs for the base layer and the corrosion-resistant layer, bonding the slabs for the base layer and the slabs for the corrosion-resistant layer together, and performing peripheral weld sealing along bonding interfaces of the slabs to form a clad slab comprising the base layer and the corrosion-resistant layer; performing a vacuum treatment to bonding interfaces after weld sealing;
    3) heating
    heating the clad slab to 900-1000 °C to form an interfacial transition layer between the base layer and the corrosion-resistant layer;
    4) rolling
    rolling the clad slab to obtain a steel strip, wherein rough rolling is performed at a temperature of 860 °C or more; finish rolling is performed at a temperature of 780-850 °C; a pass reduction rate is 5-20%, preferably 10-15%; and a cumulative reduction rate is ≥ 85%;
    5) cooling
    in the first stage, cooling the steel strip to 700-750 °C at a cooling rate of ≤ 10 °C/s after leaving a rolling mill stand; and in the second stage, cooling to 400-500 °C at a cooling rate of 30-50 °C/s; and coiling at this temperature to produce the hot-rolled strip steel.

12. The method according to claim 11, wherein in step 2), a thickness of the corrosion-resistant layer is 0.5%-20% of a thickness of the clad slab; and/or in step 3), the interfacial transition layer formed between the base layer and the corrosion-resistant layer has a thickness of ≤ 8 $\mu$m.

FIG. 1

FIG. 2

FIG. 3

FIG. 4

FIG. 5

## INTERNATIONAL SEARCH REPORT

| International application No. |
|---|
| **PCT/CN2024/094456** |

| A. | CLASSIFICATION OF SUBJECT MATTER |
|---|---|

C22C38/50(2006.01)i;  B32B15/18(2006.01)i;  B21B1/22(2006.01)i

According to International Patent Classification (IPC) or to both national classification and IPC

| B. | FIELDS SEARCHED |
|---|---|

Minimum documentation searched (classification system followed by classification symbols)

IPC: C22C, B32B, B21B

Documentation searched other than minimum documentation to the extent that such documents are included in the fields searched

Electronic data base consulted during the international search (name of data base and, where practicable, search terms used)

CNKI, CNABS, DWPI: 热轧, 钢, 基层, 过渡层, 铬, 镍, 铜, 钛, 铌, 氮, 钒, 铁素体, 珠光体, 贝氏体, 粒度, 强度, 冲击功, 耐腐蚀, 组坯, 压下率, 冷却, 厚度, hot rolled, steel, base layer, transition layer, chromium, nickel, copper, titanium, niobium, nitrogen, vanadium, ferrite, pearlite, bainite, grain size, strength, impact work, corrosion resistance, billet, reduction rate, cooling, thickness

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 113106327 A (BAOSHAN IRON & STEEL CO., LTD.) 13 July 2021 (2021-07-13) claims 1-12, description, paragraphs 30-60, and table 1 | 1-12 |
| Y | JP 2018024905 A (JFE STEEL CORP.) 15 February 2018 (2018-02-15) description, paragraphs 41, 47 and 49 | 1-12 |
| Y | CN 115679193 A (BAOSHAN IRON & STEEL CO., LTD.) 03 February 2023 (2023-02-03) description, paragraphs 51 and 63 | 4-12 |
| A | CN 112721349 A (NANJING IRON & STEEL CO., LTD.) 30 April 2021 (2021-04-30) entire document | 1-12 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 July 2024** | **25 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/094456**

| Patent document cited in search report | | | Publication date (day/month/year) | Patent family member(s) | | | Publication date (day/month/year) |
|---|---|---|---|---|---|---|---|
| CN | 113106327 | A | 13 July 2021 | None | | | |
| JP | 2018024905 | A | 15 February 2018 | JP | 6536514 | B2 | 03 July 2019 |
| CN | 115679193 | A | 03 February 2023 | None | | | |
| CN | 112721349 | A | 30 April 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201210260231
- CN 201710769999X
- CN 201811327623
- CN 201510543767
- CN 201610994234
- CN 201710996925X
- CN 201710983322